Europäisches Patentamt

European Patent Office

Office européen des brevets

(11) Publication number: **0 012 952**
**B2**

# (12) NEW EUROPEAN PATENT SPECIFICATION

(45) Date of publication of the new patent specification :
17.07.85

(51) Int. Cl.⁴ : **H 04 N** **1/23**, G 06 K 15/12,
G 02 F 1/33

(21) Application number : 79105166.7

(22) Date of filing : 14.12.79

(54) Laser beam scanning system.

(30) Priority : 29.12.78 US 974632

(43) Date of publication of application :
09.07.80 Bulletin 80/14

(45) Publication of the grant of the patent :
18.08.82 Bulletin 82/33

(45) Mention of the opposition decision :
17.07.85 Bulletin 85/29

(84) Designated contracting states :
DE FR GB IT

(56) References cited :
DE-A- 2 653 539
DE-B- 2 635 674
US-A- 3 876 829
US-A- 3 935 566
US-A- 4 000 493

(73) Proprietor : International Business Machines Corporation
Old Orchard Road
Armonk, N.Y. 10504 (US)

(72) Inventor : Latta, Milton Russell
6960 Bolado Drive
San Jose California 95119 (US)

(74) Representative : Lewis, Alan John
IBM United Kingdom Patent Operations Hursley Park
Winchester, Hants, S021 2JN (GB)

EP 0 012 952 B2

## Description

The present invention relates to laser beam scanning systems, and in particular to such systems wherein a laser beam is modulated by audio frequency energy at two or more different carrier frequencies for creating a two-dimensional scan pattern.

Acoustically modulated laser beam scanning systems, particularly raster scanning systems, are known. Several satisfactory system arrangement are known. As the art progresses, however, the increasing demands relating to speed, resolution and registration, together with the demands on impact printing, paper toning and fusing bring about some rather difficult problems. Wherever possible, it is highly desirable that conventional methods and conventional apparatus be used, if for no other reason than such methods and apparatus have proved their worth in past performance.

In many very high speed laser scanning systems, particularly in those used in printing, an arrangement is known for scanning with two or more focussed scan beams simultaneously in order to reduce the scan rate required of the deflection apparatus and to increase the available rise and fall times of the intensity modulation apparatus. This is sometimes accomplished with acoustic modulating apparatus excited at two or more carrier frequencies in order to provide the necessary individually modulatable, non-coincident scan beams.

In such an acoustic modulated raster scanning system of the type wherein a laser beam is deflected in one direction by mechanical apparatus and deflected in the normal direction and intensity modulated by acoustic modulating apparatus operating at two or more different carrier frequencies simultaneously, any attempt to meet increased demands usually results in undesirable intermodulation products. Such prior art systems are particularly represented in the following U.S. patents :

| | | | |
|---|---|---|---|
| 3,614,310 | 10/1971 | Korpel | 178/6.8 |
| 3,744,039 | 7/1973 | Hrbek et al | 340/173LM |
| 3,900,851 | 8/1975 | Bucy et al | 346/49 |
| 3,935,566 | 1/1976 | Snopko | 340/173LM |
| 4,000,493 | 12/1976 | Spaulding et al | 346/1 |
| 4,053,898 | 10/1977 | Hirayama et al | 346/1 |

U.S. specification No. 3 744 039 (Hrbek) discloses a character imaging system comprising an acousto-optical device simultaneously operable at a plurality of different frequencies to produce a corresponding plurality of output beams from an incident input beam, the output beams being angularly spaced by amounts such that, on reaching a display area, the beams form a line of illuminated light patches or spots centred on scan lines ; a laser source for directing an incident beam of coherent light at the acousto-optical device ; means for operating the acousto-optical device at any selected ones of the plurality of predetermined frequencies to produce corresponding selected ones of the output beams ; and cyclically operable deflecting means on which the output beams are incident for causing the output beams to scan over the display area.

The Hrbek specification is discussed in U.S. specification No. 3 935 566 (Snopko). The Snopko specification is concerned with the problem that, under certain signal condition, spurious amplitude modulation of the output, writing beams may occur due to cross-channel interference effects occurring within the acousto-optical device, that is the Bragg cell.

In the Snopko specification the theory is proposed that the spurious amplitude modulation can be described in terms of rediffraction of the primary output light beam. In Snopko nomenclature, using acoustic drive frequencies $f_1$, $f_2$, $f_2$ to give primary beam, $l_1$, $l_2$, $l_3$, $l_{3/1}$ indicates the secondary output light beam formed from the primary output beam $l_3$ rediffracted by the acoustic wave $f_1$. The solution proposed in the Snopko specification comprises choosing the acoustic frequencies $f_1$, $f_2$, $f_3$ such that the secondary output light beams $l_{3/1}$, $l_{3/2}$, $l_{2/1}$, $l_{2/3}$, $l_{1/2}$ and $l_{1/3}$ are equally spaced. While this may be a solution, the practical implementation is not simple as evidenced by the specific frequency cited in the Snopko specification. In addition, the primary output beams are spaced by increasing amounts which prevents the display area being scanned along a series of parallel equally spaced scan lines.

It is therefore an object of the present invention to provide a character or other imaging system employing an acousto-optical device operated at a plurality of different frequencies in which the problem of spurious amplitude modulation of the light intensity of areas of the image is reduced or overcome in a way that is practical, which can be implemented at a reasonable cost, and which scans along equally spaced parallel scan lines.

U.S. specification No. 4 000 493 (Spaulding) discloses apparatus for recording on a light-sensitive medium an optical image representing input data. The Spaulding apparatus comprises an acousto-optical device simultaneously operable at a plurality of different frequencies to produce a corresponding plurality of output beams from an incident input beam, the output beams being angularly spaced by amounts such that, on reaching a display area, the beams form a line of illuminated light patches or spots centred on scan lines ; a laser source for directing an incident beam of coherent light at the acousto-optical device ; means for operating the acousto-optical device at any selected ones of the plurality of predetermined frequencies to produce corresponding selected ones of the output beams ; and cyclically operable deflecting means on which the output beams are incident for causing the output beams to scan over the display area.

The Spaulding specification discloses operating the acousto-optical device with a series of driving frequencies differing by similar amounts. In one example the frequencies are centred at 40 megahertz and differ by 0.5 megahertz. The use of such regularly spaced frequencies can result in substantial optical spot inter-action causing undesirable and clearly visible defects in the displayed image. Spaulding was aware of optical spot interaction but does not propose a solution. As aforesaid, it is a prime object of the present invention to provide a solution to the problem caused by spot inter-action.

Accordingly the present invention provides a method of tracing an optical image representing input data by optically scanning a display area in a multiplicity of parallel line scans, said method being performed by apparatus comprising an acousto-optical device simultaneously operable at a plurality of different frequencies to produce a corresponding plurality of output beam $(f_1, f_2)$ from an incident input beam, the output beams being angularly spaced by amounts such that, on reaching a display area, the beams form a line of illuminated light patches or spots centred on scan lines ; a laser source for directing an incident beam of coherent light at the acousto-optical device ; means for operating the acousto-optical device at any selected one of the plurality of predetermined frequencies to produce corresponding selected ones of the output beams ; and cyclically operable deflecting means on which the output beams are incident for causing the output beams to scan along the scan lines ; and said method being characterised by operating the acousto-optical device under conditions of frequency and optical orientation such that, during any one scan across the display area no two illuminated light patches or spots overlap, while during a sequence of inter laced scans across the display area, continuous image lines are formed by light patches or spots which overlap by amounts that would cause observable inter-modulation interference effects if the overlapping light patches or spots had been illumined at the same time.

In order that the invention may be more readily understood reference will now be made to the accompanying drawings, in which :

Figure 1 is a functional diagram of a basic laser scanning system to which the invention is applicable ;

Figures 2 and 3 are two schematic diagrams of the modulating unit in the scanning system of Figure 1 operating in accordance with the prior art ;

Figures 4 and 5 are two schematic diagrams of the modulating unit in the scanning system of Figure 1 operating in accordance with the invention ; and

Figure 6 is a schematic diagram of the modulating unit in the scanning system of Figure 1 operating in a further way in accordance with the invention.

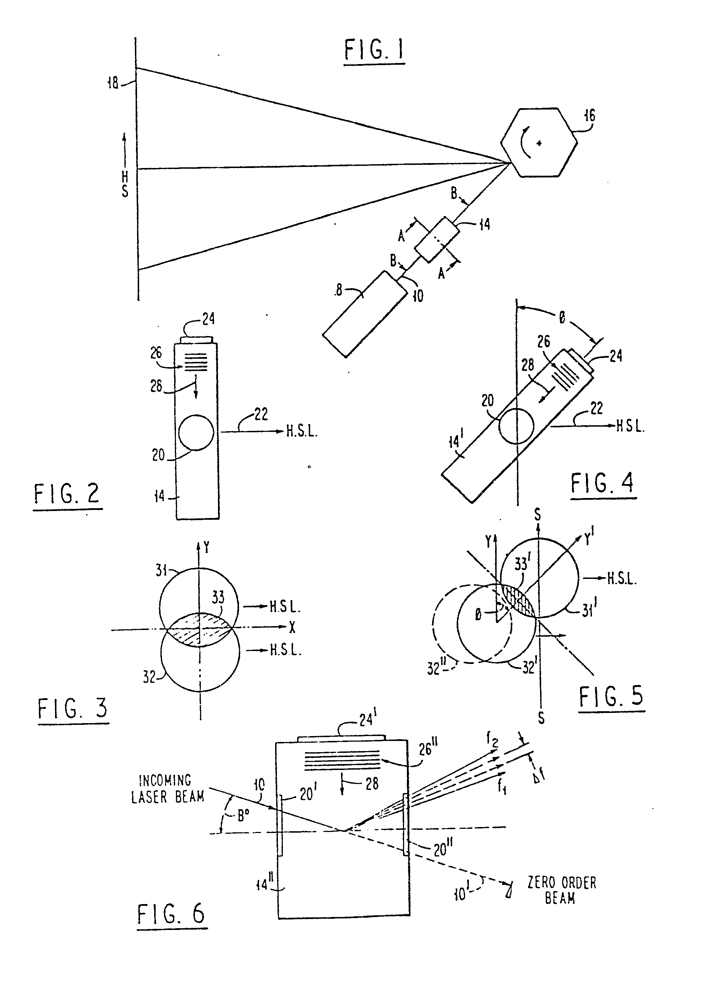

A basic laser scanning system to which the principles of the invention are applicable is shown in Figure 1. A laser generator 8 is arranged to deliver a beam of coherent light through an acoustic modulating unit 14 where it is divided into two or more scan beams which are projected onto rotating mirror apparatus 16, all of conventional construction. The rotating mirror 16 scans each beam axially along the surface of a cylindrical drum of large radius which forms a plane surface 18. Vertical separation of successive scan lines over the surface 18 is effected by lateral movement of the plane surface 18 by rotation of the cylinder. Acoustic modulating unit 14 provides the two or more scan beams spaced the required distance apart for simultaneous multiple scanning of the surface 18. The surface 18 in one application is a photo-conductive drum for a photo-printing machine or the like. It is clearly understood that the system as shown has synchronising apparatus which is omitted for clarity inasmuch as such in and of itself is not a part of the invention and that those skilled in the art will have the necessary means at hand for synchronising the system in known manner in at least one of many forms available.

A view of the modulating unit 14 taken in the direction A-A in the diagram of Figure 1 is shown schematically in Figure 2. The laser beam is projected into an optical element 20. The arrow 22 indicates the relative direction of the scan lines along the surface 18. A piezoelectric transducer 24 responsive to two or more electric carrier frequency waves, is arranged to generate acoustic waves indicated at 26 propagated in the direction of the arrow 28 to modulate and deflect the laser beam in the direction normal to arrow 22. The waves are also modulated in intensity according to a dotsequential signal which will be reproduced in an optical display in accordance with conventional practice. Two or more carrier wave frequencies are used so that two or more scan beams are produced simultaneously and a resulting scanning raster is formed from a plurality of sets of scan lines. Referring now to Figure 3 there is shown schematically a pair of resulting dots or light spots 31 and 32 in adjacent scan lines which overlap in a common area 33. In the prior art arrangements, a certain amount of such overlap must be tolerated since, in order to produce continuous vertical lines, the spots must necessarily be larger than the scan line spacing. Since the laser scan beams that produce spots 31 and 32 are increased or decreased (depending on the angular orientation of the laser beam relative to the acoustic wave 26) in frequency by the value of the carrier frequency by which they were modulated, the two beams interfere in the region of overlap, producing an unwanted modulation of a frequency equal to the difference in the two carrier frequencies.

The above description, in particular the operation of modulating unit 14 as described with reference to Figures 2 and 3, represents the prior art. In the overlap area 33 the two beams interfere producing intermodulation products which are undesirable. This undesirable intermodulation occurs at the difference frequency of

$$f_3 = f_1 - f_2 \tag{1}$$

where

$f_3$ is the frequency of the intermodulation products ; and

$f_1$, and $f_2$ are the carrier frequencies at which the electrical transducer is driven.

The intermodulation depth is maximum along the direction of the scan line ; it decreases from this line in both the positive and the negative perpendicular directions. The intermodulation products can be greatly reduced, if not eliminated entirely, by use of a scanning system wherein the structure of the prior art arrangement is altered to incorporate the principle of the present invention. In accordance with one technique the carrier frequency difference is increased in order to increase the scan beam spacing and reduce or eliminate scan beam overlap. The scan line spacing required is attained by rotating the modulating unit 14 as shown in Figure 4 through the angle θ. The corresponding spot pattern is shown in Figure 5. The reduction in the intermodulation effect is readily appreciated on inspection of the much smaller overlap area 33'. This overlap area is eliminated when the unit 14 is rotated further and the spots are located relative to each other as is indicated by the dashed circle 32" and the circle 31'.

This technique has several advantages which help to reduce intermodulation effects. One advantage is that due to a larger separation between the scan beam centres, the peak amplitudes at the midpoint of the two beam centres can be reduced without reduction of the contrast. The second advantage is that the effective overlap region is smaller. The third advantage resides in the fact that the spot motion is integrated along the scan line direction whereby the rotation angle θ produces a smoothing effect to the sinusoidal variations of intensity in the resultant exposure. Also it is an advantage that a larger separation requires a greater frequency difference between the two waveforms used to drive the electro-acoustic transducer and thus the exposure variations occur over a smaller distance in the scan line direction.

It has been found that with an angle θ of zero degrees 33 % intermodulation resulted, whereas with angle θ at 45° the maximum intermodulation resulting was 13 %. The latter modulation depth may be below the threshold level for producing print density modulation when using an electrophotographic printing process.

This technique can be applied for a range of values of the angle θ. The optimum value can then be determined from the acoustic modulator bandwidth available. The acoustic modulating unit as mentioned above is also capable of being used with more than two modulating carrier frequencies.

The basic arrangement shown in Figure 1 may alternatively be formed with the acoustic modulating unit 14 operating in another way. A view of the modulating unit 14 in the direction B-B is shown schematically in Figure 6. The incoming laser beam passes through the modulating unit 14" in a straight line when the piezoelectric transducer 24' is quiscent so as to produce a zero order beam 10' as shown.

When electric carrier frequency waves are applied to the transducer 24' the beam 10 is divided into a plurality of scan beams, each corresponding to a different carrier wave frequency, for example $f_1$ and $f_2$. The separation of the individual scan beams is greater than the corresponding separation in the arrangement of Figures 4 and 5. This wider separation of the scan beams is adapted to provide an interlaced scanning approach to form a required scan pattern.

An example of this principle is illustrated in Tables I and II below. The laser beam 10 is divided into two scan beams which are spaced apart a distance equivalent to the distance between every third scan line of a pattern of parallel scan lines. Therefore, for example, in one scan of the two scan beams, scan lines 3 and 6 are produced. For the next scan, the scan beams are moved through a distance equivalent to two scan lines so that, in the next scan, lines 5 and 8 are produced. The scan beams are then moved through a further distance equivalent to two scan lines, and, in the next scan, lines 7 and 10 are produced.

It will be seen from Table I that with this interlacing of scan lines all the required scan lines are eventually produced. The size of each scan beam is chosen so that the area scanned during each scan is wider than the distance between adjacent scan lines. This ensures that there is an overlap of adjacent scan line areas and that characters printed will be continuous.

However, since adjacent scan lines are not produced simultaneously by adjacent scan beams, this overlap of scan areas will not be associated with overlap of adjacent scan beams and there will be no undesired intermodulation products.

This principle can be applied to an arrangement having more than two scan beams.

Table I

| | Scan Number | | | | | | |
|---|---|---|---|---|---|---|---|
| Scan Line | 1 | 2 | 3 | 4 | 5 | 6 | 7 |
| 3 | | X | | | | | |
| 4 | X | | | | | | |
| 5 | | | X | | | | |
| 6 | | X | | | | | |
| 7 | | | | X | | | |
| 8 | | | X | | | | |
| 9 | | | | | X | | |
| 10 | | | | X | | | |
| 11 | | | | | | X | |
| 12 | | | | | X | | |
| 13 | | | | | | | X |
| 14 | | | | | | X | |
| 15 | | | | | | | |
| 16 | | | | | | | X |

Table II

| Scan Number | Lines Scanned |
|---|---|
| 3 | 5,8 |
| 4 | 7,10 |
| 5 | 9,12 |
| 6 | 11,14 |
| 7 | 13,16 |
| 8 | 16,18 |

**Claim**

A method of tracing an optical image representing input data by optically scanning a display area (18) in a multiplicity of parallel line scans, said method being performed by apparatus comprising an acousto-optical device (14) simultaneously operable at a plurality of different frequencies to produce a corresponding plurality of output beam ($f_1$, $f_2$) from an incident input beam (10), the output beams being angularly spaced by amounts such that, on reaching a display area, the beams form a line of illuminated light patches or spots (31, 32 ; 31′, 32′) centred on scan lines ; a laser source (8) for directing an incident beam of coherent light at the acousto-optical device ; means (24) for operating the acousto-optical device at any selected one of the plurality of predetermined frequencies to produce corresponding selected ones of the output beams ; and cyclically operable deflecting means (16) on which the output beams are incident for causing the output beams to scan along the scan lines ; and said method being characterised by operating the acousto-optical device (14) under conditions of frequency and optical orientation such that, during any one scan across the display area no two illuminated light patches or spots overlap, while during a sequence of inter laced scans across the display area, continuous image lines are formed by light patches or spots which overlap by amounts that would cause observable inter-modulation interference effects if the overlapping light patches or spots had been illuminated at the same time.

## Patentanspruch

Verfahren zum Aufzeichnen eines optischen Eingangsdaten darstellenden Bildes durch das optische Abtasten einer Darstellungsflaeche (18) mittels einer Vielzahl von parallelen Linienabtastung, wobei das Verfahren mit Hilfe eines Apparatus mit einer akusto-optischen Anordnung (14) durchgefuehrt ist, wo diese Anordnung gleichzeitig bei mehreren verschiedenen Frequenzen betreibbar ist, um eine entsprechende Zahl von Ausgangsstrahlenbuendeln ($f_1$, $f_2$) aus einem einfallenden Eingangs-strahlenbuendel (10) entstehen zu lassen, wobei diese Ausgangsstrahlenbuendel mit winkelmaessigen Abstaenden von derartigen Betraegen getrennt voneinander liegen, dass sie beim Erreichen der Darstellungsflaeche eine Linie von beleuchteten Lichtflecken oder Lichtpunkten (31, 32 ; 31', 32'), die auf Abtastlinien zentriert sind ; eine Laserquelle (8), um ein einfallendes Strahlenbuendel aus kohaerentem Licht gegen die akusto-optische Anordnung zu richten ; Mittel (24) zum Betrieben dieser Anordnung bei einer ausgewaehlten unter den mehreren vorbestimmten Frequenzen zur Entstehung von entsprechend ausgewaehlten Ausgangsstrahlenbuendeln ; und zyklisch betreibbare Ablenkungsstrahlenbuendel (16) ; auf die die Ausgangsstrahlenbuendel einfallen, so dass diese Ausgangsstrahlenbuendel entlang der Abtastlinien abgelenkt sind ; wo dieses Verfahren dadurch gekennzeichnet ist, dass bei dem Betrieb der akusto-optischen Anordnung (14) in derartigen Verhaeltnissen von der Frequenz und der optischen Richtung und bei irgendender Abtastung in der Darstellungsflaeche zwei beleuchteten Lichtflecken oder Lichtpunkte sich nicht ueberlappen, als bei einer Sequenz von verschachtelten Abtastbewegungen in der Darstellungsflaeche kontinuierliche Bildlinien durch die Lichtflecken oder Lichtpunkte gebildet sind, die sich um derartigen Betraegen ueberlappen, die beochtbare Intermodulations-Interferenzeffekte hervorbringen, wenn die sich ueberlappenden Lichtflecke oder Lichtpunkte gleichzeitig beleuchtet sind.

## Revendication

Procédé pour tracer une image optique représentant des données d'entrées en balayant optiquement une zone d'affichage (18) en plusieurs balayages de lignes parallèles, ledit procédé étant mis en œuvre par un appareil comportant un dispositif acousto-optique (14) pouvant fonctionner dans plusieurs fréquences différentes de manière à produire un nombre correspondant de faisceaux de sortie ($f_1$, $f_2$) à partir d'un faisceau d'entrée incident (10), les faisceaux de sortie étant distants les uns des autres par un espacement angulaire tel que, lorsqu'ils atteignent ladite zone d'affichage, ils forment une ligne de tâches lumineuses ou spots (31, 32 ; 31', 32') centrés sur lesdites lignes de balayage ; une source laser (8) permettant de diriger un faisceau incident de lumière cohérente vers ledit dispositif acousto-optique ; des moyens (24) pour faire fonctionner ce dernier dans n'importe laquelle des nombreuses fréquences prédéterminées afin de produire des faisceaux de sortie ainsi sélectionnés ; et des moyens de déflexion (16) fonctionnant de façon cyclique sur lesquels les faisceaux sont appliqués de façon à obtenir le balayage desdites lignes de balayage par ces faisceaux de sortie, ledit procédé étant caractérisé en ce que ledit dispositif acousto-optique (14) fonctionne dans des fréquences et selon une orientation optique telles qu'au cours de tout balayage effectué dans la zone d'affichage, deux tâches lumineuses ou deux spots, illuminés, ne se chevauchent pas, alors que dans le cas d'une séquence de balayages entrelacés dans ladite zone d'affichage, des lignes d'image continues sont formées par des tâches lumineuses ou des spots se chevauchant dans des conditions qui pourraient donner lieu à des phénomènes d'interférence par intermodulation observables si toutes les tâches lumineuses ou tous les spots sont illuminés simultanément.

FIG. 1

FIG. 2

FIG. 3

FIG. 4

FIG. 5

FIG. 6